**Europäisches Patentamt**

(19) **European Patent Office**

**Office européen des brevets**

(11) Numéro de publication: **0 025 730**
**B1**

(12) **FASCICULE DE BREVET EUROPEEN**

(45) Date de publication du fascicule du brevet: **27.07.83**

(51) Int. Cl.³: **H 04 N 5/21, H 04 N 5/14**

(21) Numéro de dépôt: **80401189.8**

(22) Date de dépôt: **13.08.80**

(54) Détecteur de mouvement pour systèmes de réduction de visibilité du bruit sur des images de télévision.

(30) Priorité: **16.08.79 FR 7921201**

(43) Date de publication de la demande:
**25.03.81 Bulletin 81/12**

(45) Mention de la délivrance du brevet:
**27.07.83 Bulletin 83/30**

(84) Etats contractants désignés:
**DE GB NL**

(56) Documents cités:
**FR - A - 2 371 108**
**FR - A - 2 387 557**
**US - A - 4 090 221**

**THE BELL SYSTEM TECHNICAL JOURNAL vol. 52, no. 1, janvier 1973 New York US CONNOR et al.: "A Frame-to-Frame Picturephone Coder For Signals Containing Differential Quantizing Noise", pages 35—51.**

(73) Titulaire: **L'Etat Français représenté par le Secrétaire d'Etat aux Postes et Télécommunications et à la Télédiffusion (Centre National d'Etudes des Télécommunications) 38-40 rue du Général Leclerc**
**F-92131 Issy-les-Moulineaux (FR)**

(73) Titulaire: **Etablissement Public de Diffusion dit "Télédiffusion de France"**
**21-27 rue Barbès**
**F-92120 Montrouge (FR)**

(72) Inventeur: **Remy, Maurice**
**5, Avenue Erlanger**
**F-75016 Paris (FR)**
Inventeur: **Poncin, Jacques**
**11, Boulevard Volney**
**F-35000 Rennes (FR)**
Inventeur: **Rogel, Pierre Réne**
**14, rue Gould'oeuvre**
**F-35690 Acigne (FR)**

(74) Mandataire: **Le Guen, Louis François**
**13, rue Emile Bara BP 91**
**F-35802 Dinard Cedex (FR)**

Courier Press, Leamington Spa, England.

Détecteur de mouvement pour systèmes de réduction de visibilité du bruit sur des images de télévision

La présente invention concerne des systèmes de réduction de visibilité du bruit sur des images de télévision dans lesquels on utilise dans traitements numériques.

On connaît déjà des systèmes de ce genre décrits notamment dans la demande de brevet français 77 11800 déposée le 14 avril 1977 par les présents demandeurs et publiée sous le N° 2 387 557, la demande de brevet français publiée sous le N° 2 371 108, le brevet américain 4 090 221 et dans l'article technique du B.S.T.J. vol. 52, N° 1 de janvier 1973 par CONNOR.

Dans ces systèmes, on utilise une mémoire d'image dont une fraction $a$ de chaque échantillon de sortie est ajoutée à une fraction $(1-a)$ de chaque échantillon correspondant du signal d'entrée, le coefficient $a$ étant choisi par un organe de décision en fonction des coefficients $a$ antérieurs et du signal de sortie d'un détecteur de mouvement. Dans certains systèmes, le signal appliqué à la mémoire d'image, est le signal d'entrée, dans d'autres, c'est le signal traité.

Un objet de la présente invention consiste à prévoir un détecteur de mouvement ayant des performances améliorées.

D'une manière générale, un détecteur de mouvement doit pouvoir distinguer les points en mouvement des points stationnaires, en présence de bruit. Pour cela, il utilise les corrélations spatiale et temporelle du signal d'image. Une des difficultés rencontrées dans ces détecteurs est la détection des détails fins. Ces détails fins sont des détails de faible amplitude sur l'image, mais auxquels l'oeil est sensible. On peut citer, à titre d'exemples, le chevelure d'un personnage en gros plan, le cas d'une pelouse ou d'un arrière plan très fouillé, etc. Une erreur de détection de mouvements dans ces particuliers entraîne un filtrage temporel et donc une perte de définition locale de ces informations fines.

Un objet de l'invention consiste à prévoir un détecteur qui compense cette faiblesse et assure également une plus grande indépendance du système complet de réduction de bruit vis-à-vis du rapport signal à bruit de l'image d'entrée à traiter.

Pour améliorer la détection des détails fins sans perdre le bénéfice du traitement temporel, il est souhaitable que le détecteur de mouvement ait, sur le plan de la sensibilité, un fonctionnement comparable à celui de l'oeil de l'observateur. Il est, en effet, inutile de détecter parfaitement des détails très peu importants pour l'oeil humain, mais il est souhaitable d'assurer une bonne détection des détails pour lesquels l'oeil ne supporte aucun défaut, notamment en relation avec une perte de définition.

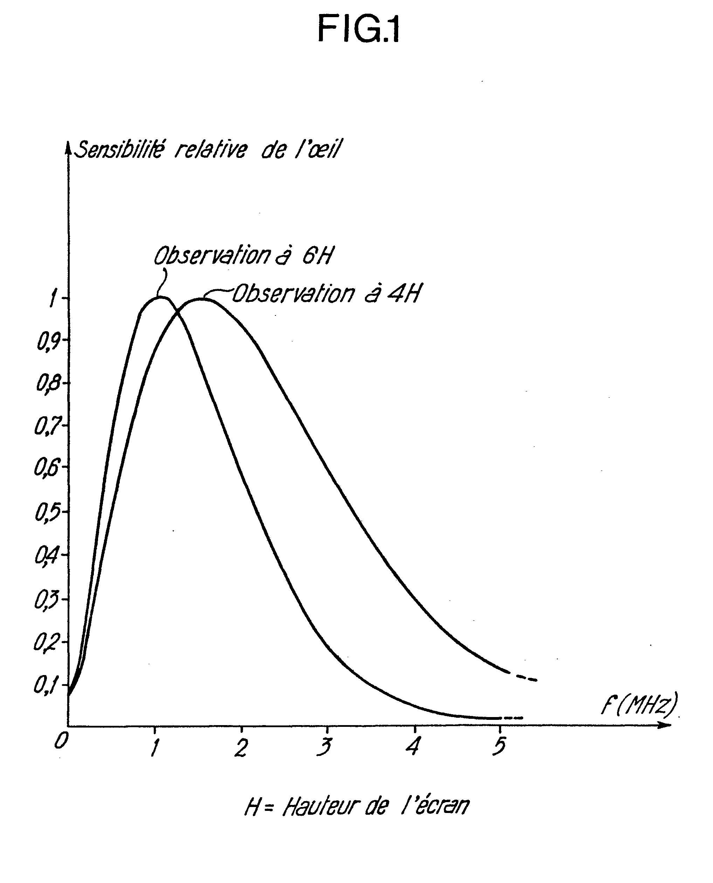

Les données de base pour la réalisation d'un détecteur de mouvement de bonne qualité sont donc les propriétés psychophysiques de la vision humaine et, en particulier, celles de l'acuité visuelle. L'oeil humain agit comme un filtre spatio-temporel dont la modélisation est difficile. C'est pourquoi les différentes courbes des sensibilité visuelle rencontrées dans la littérature technique diffèrent suivant les hypothèses, les critères et la méthodologie utilisés par leurs auteurs. Elles présentent cependant des caractéristiques fondamentales communes et, en particulier, un maximum pour des fréquences spatiales moyennes. Les courbes représentées sur la Fig. 1 expriment la sensibilité relative de l'oeil en fonction des fréquences spatiales, pour deux distances d'observation habituellement choisies dans les essais subjectifs, soit 6H et 4H où H est la hauteur de l'écran. Ces courbes sont le résultat d'une modélisation qui est décrite dans l'article technique "Predictions of an Inhomogeneous Model: Detection of Local and Extended Spatial Stimuli" par F. Kretz, F. Scarabin et E. Bourguignat remais pour être publié en 1979 par la revue américaine Journal Optical Society of America. De l'examen de ces courbes, il apparaît que la sensibilité de l'oeil présente un maximum pour une fréquence qui dépend de la distance d'observation. Par ailleurs, l'allure de la courbe se modifie en fonction des fréquences temporelles. Le maximum existe toujours pour des mouvements faibles, ce qui est très important étant donné l'objet de la présente invention, et tend à disparaître pour des fréquences temporelles élevées correspondant aux mouvements importants. Dans ce dernier cas, l'oeil agit comme un filtrage passe-bas.

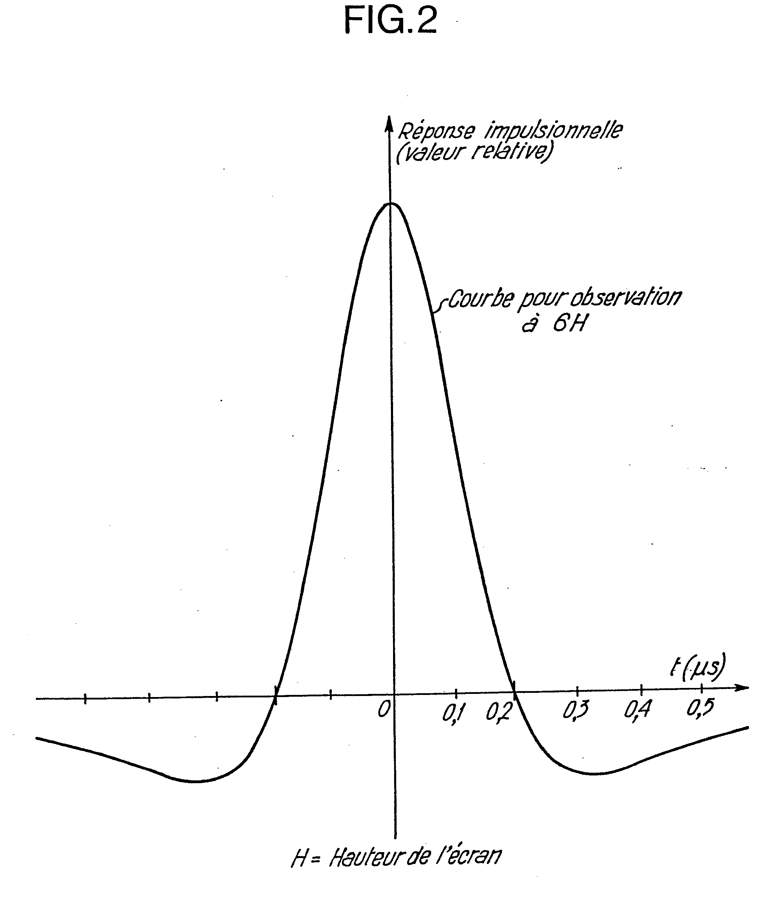

La Fig. 2 représente la réponse impulsionnelle du filtre dont la réponse fréquentielle est donnée à la Fig. 1.

De l'examen des courbes 1 et 2, il apparaît que l'oeil présente donc une sensibilité qui a la forme d'un filtrage spatial linéaire présentant un maximum d'acuité pour des fréquences moyennes. Dans le détecteur de mouvement suivant l'invention, on va utiliser cette importante propriété. Il serait possible de réaliser un filtre équivalent à celui représenté à la Fig. 1, mais les lobes négatifs de la réponse impulsionnelle, Fig. 2, apportent des défauts inhérents à la détection de mouvement. En effet, le passage par zéro de la réponse impulsionnelle introduit une fausse détection au point concerné, lors d'une transition sur l'image. Ce défaut empêche d'utiliser directement un tel filtre.

Un contour vertical en déplacement horizontal crée une transition temporelle correspondant à une différence d'amplitude interimage qui peut être représentée par la courbe de la Fig. 3a. Les transitions du signal de différence inter-image indiquées en Y1 et Y2 délimitent la zone en mouvement.

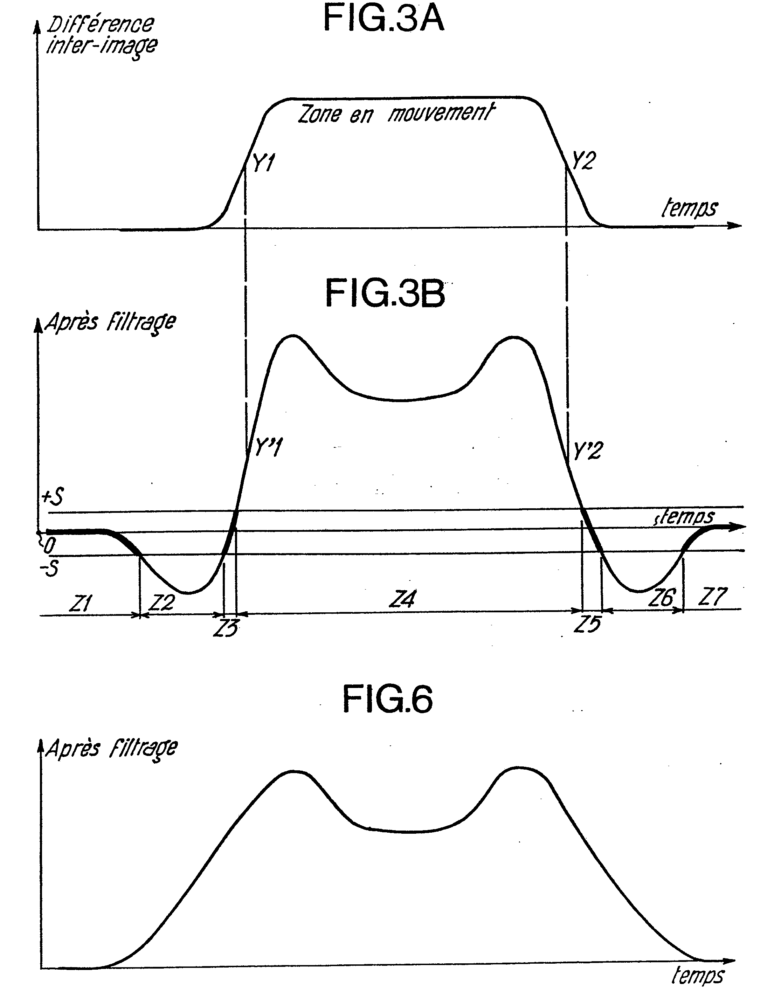

La courbe de la Fig. 3b représente le signal de la Fig. 2a après passage dans un filtre de réponse équivalente à celle qui est représentée à la Fig. 1. En fait, étant donné la réponse impulsionnelle de la Fig. 2, ce filtrage fait apparaître plusieurs zones Z1 à Z7 pour la courbe 3b. Avant le point Y'1 correspondant à Y1, Fig. 3a, on a une zone Z1 d'amplitude nulle, puis décroissant jusqu'à couper la limite —S. Puis on a une zone Z2 située entièrement au-dessous de la limite —S, puis une zone Z3 dans laquelle le signal filtré croît de la limite —S à la limite +S. Au centre, on a une zone Z4 pour laquelle le signal est toujours au-dessus de +S, avec deux bosses à ses extrémités. A droite de Y2, les zones Z5, Z6 et Z7 sont sensiblement, dans le cas particulier montré dans un but d'illustration, symétriques des zones Z3, Z2 et Z1. Pour effectuer la détection de mouvement, les circuits de décision du détecteur de mouvement vont comparer ce signal filtré de la Fig. 3b à deux seuils symétriques que l'on suppose ici égaux à +S et —S, ce qui correspond au cas le plus simple. Les zones Z1, Z3, Z5 et Z7 seront donc considérées comme stationnaires. La décision est correcte pour les zones Z1 et Z7, mais les zones Z3 et Z5 constituent des détections erronées car elles se situent sur les transitions des zones en mouvement et elles entraînent un filtrage inopportun pour les points concernés.

Suivant une caractéristique de la présente invention, il est prévu un détecteur de mouvement comprenant un filtre passe-bas et un filtre passe-bande dont les entrées reçoivent en parallèle les échantillons délivrés par ledit soustracteur, la sortie de filtre passe-bande étant reliée à l'entrée d'un circuit commandable d'inversion de polarité dont la sortie est reliée à une entrée d'un additionneur, la sortie du filtre passe-bas étant reliée à l'autre entrée de l'additionneur, les sorties de signe des filtres passe-bande et passe-bas étant, de plus, reliées respectivement aux deux entrées d'un circuit OU-exclusif dont la sortie est reliée à l'entrée de commande dudit circuit commandable d'inversion de polarité, l'inversion de polarité étant effetuée dans ledit circuit commandable d'inversion de polarité quand les valeurs des entrées du circuit OU-exclusif sont différentes, la sortie dudit additionneur étant reliée à un circuit de décision à seuil.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la fig. 1 montre des courbes illustrant la sensibilité relative d l'oeil en fonction de fréquences spatiales,

la Fig. 2 est un diagramme représentant la réponse impulsionnelle d'un filtre dont la réponse fréquentielle correspondrait aux courbes de la Fig. 1,

les Figs. 3a et 3b sont des diagrammes de différences d'amplitude inter-image en fonction du temps correspondant à une transition temporelle créée par un contour vertical en déplacement horizontal, l'une avant filtrage, l'autre après filtrage dans un filtre dont la réponse impulsionnelle correspond à la courbe de la Fig. 2,

la Fig. 4 est un bloc-diagramme d'un système de réduction de visibilité du bruit, suivant l'invention,

les Figs. 5a à 5c sont des diagrammes amplitude-fréquence permettant d'illustrer le fonctionnement du système de la Fig. 4,

la Fig. 6 est un diagramme illustrant la différence d'amplitude inter-image obtenue à la sortie du circuit de filtrage du système de la Fig. 4, quand on lui a appliqué le signal d'entrée représenté à la Fig. 3a, et

la Fig. 7 est un schéma détaillé du circuit de filtrage utilisé dans le système de la Fig. 4.

Un rappelle tout d'abord que les courbes des Figs. 1, 2, 3a et 3b ont été commentées dans le préambule de la présente description.

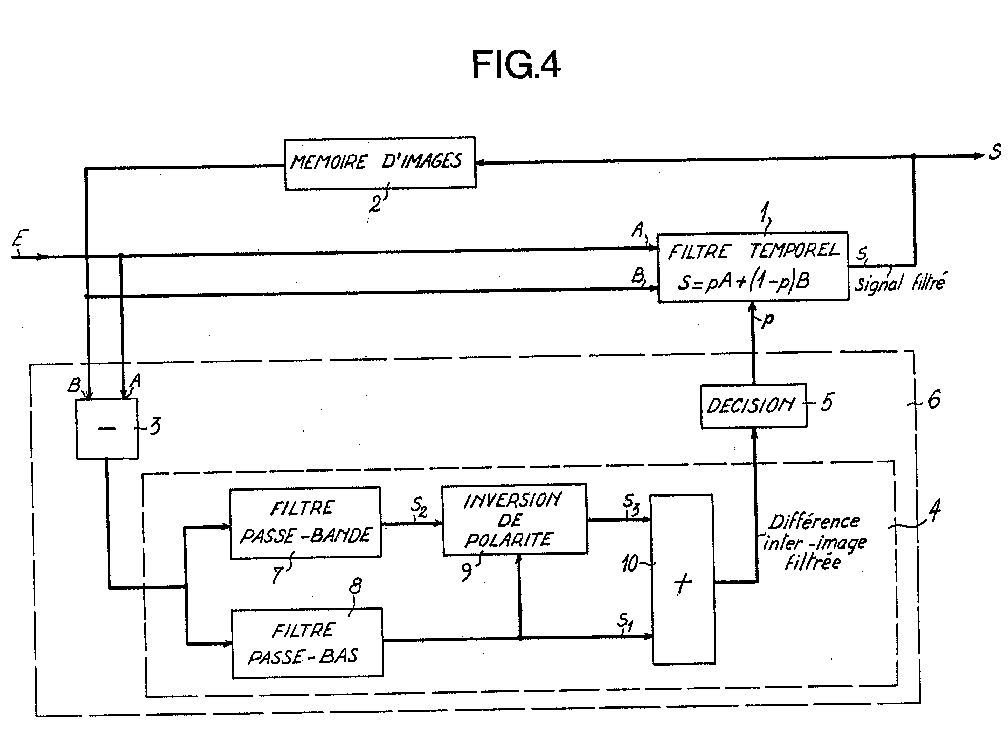

Le système de la Fig. 4 comprend un filtre temporel 1 dont une entrée A est reliée à l'entrée E du système qui reçoit les signaux vidéo échantillonnés à traiter. La sortie du filtre temporel 1 est reliée, d'une part, à la sortie S du système et, d'autre part, à l'entrée d'une mémoire d'image 2 dont la sortie est reliée à l'entrée B du filtre temporel 1. L'entrée E et la sortie de la mémoire 2 sont également respectivement reliées aux entrées A et B d'un soustracteur 3 dont la sortie est reliée à l'entrée d'un circuit de filtrage 4. La sortie du circuit 4 est reliée à un organe de décision 5 dont la sortie est reliée à l'entrée de commande P du filtre temporel 1. L'ensemble des circuits 3 à 5 forme un détecteur de mouvement 6.

Dans le système de la Fig. 4, le filtre temporel combine les signaux appliqués à ses entrées A et B selon la formule ci-dessous:

$$S = pA + (1-p)B \qquad (1)$$

dans laquelle A représente l'amplitude de l'échantillon courant appliqué à son entrée A, c'est à dire, le signal direct, B l'amplitude de l'échantillon traité correspondant de l'image précédente appliqué à son entrée B, et $p$ un coefficient compris entre 0 et 1 qui est délivré par le détecteur de mouvement 6. A titre indicatif, si $p=1$, S est égal à A, ce qui correspond au cas où il y a mouvement important. Au contraire, si $p=0$, S est égal à B, ce qui correspond au cas d'une image immobile. Entre ces deux valeurs limites, $p$ peut, selon la nature du détecteur de mouvement, prendre des valeurs continues ou discrètes. Dans le détecteur de mouvement, le soustracteur 3 soustrait chaque échantillon du signal direct de son homologue issu de la mémoire 2, c'est à dire qu'il établit pour chaque échantillon une différence d'amplitude inter-image. Donc, si on a un contour vertical en déplacement horizontal, le soustracteur 3 délivre, pour les échantillons d'une ligne, des amplitudes dont la variation dans le temps a l'allure de la courbe de la Fig. 3a. Le filtre 4 a pour objet de modifier, suivant l'invention, ces variations d'amplitudes pour délivrer un signal filtré au circuit de décision 5. Celui-ci peut être un circuit à deux seuils, tels +S et —S mentionné plus haut.

Avec un circuit de décision à deux seuils, on obtient un premier élément de décision qui est binaire, soit égal à 1 si la différence appliquée est en dehors de la zone définie entre les seuils, soit égal à 0 dans le cas contraire. Ce premier élément de décision peut être combiné avec les éléments de décision précédents dans le circuit de décision afin de définir le paramètre $p$ qui est appliqué au filtre temporel 1. Un exemple de combinaison d'éléments de décision est donné dans la table de vérité de la description de la demande de brevet français 2 387 557 citée plus haut.

Le circuit de filtrage 4 comprend, suivant l'invention, un filtre passe-bande 7 et un filtre passe-bas 8 dont les entrées sont reliées en parallèle à la sortie du soustracteur 3. La sortie du filtre passe-bande 7 est reliée à l'entrée de signal d'un circuit d'inversion de polarité 9 dont la sortie de signal est reliée à une entrée d'un additionneur 10. La sortie du filtre passe-bas 8 est reliée, d'une part, à l'entrée de commande du circuit d'inversion de polarité 9 et, d'autre part, à l'autre entrée de l'additionneur 10. La sortie de l'additionneur 10 est reliée à l'entrée du circuit de décision 5.

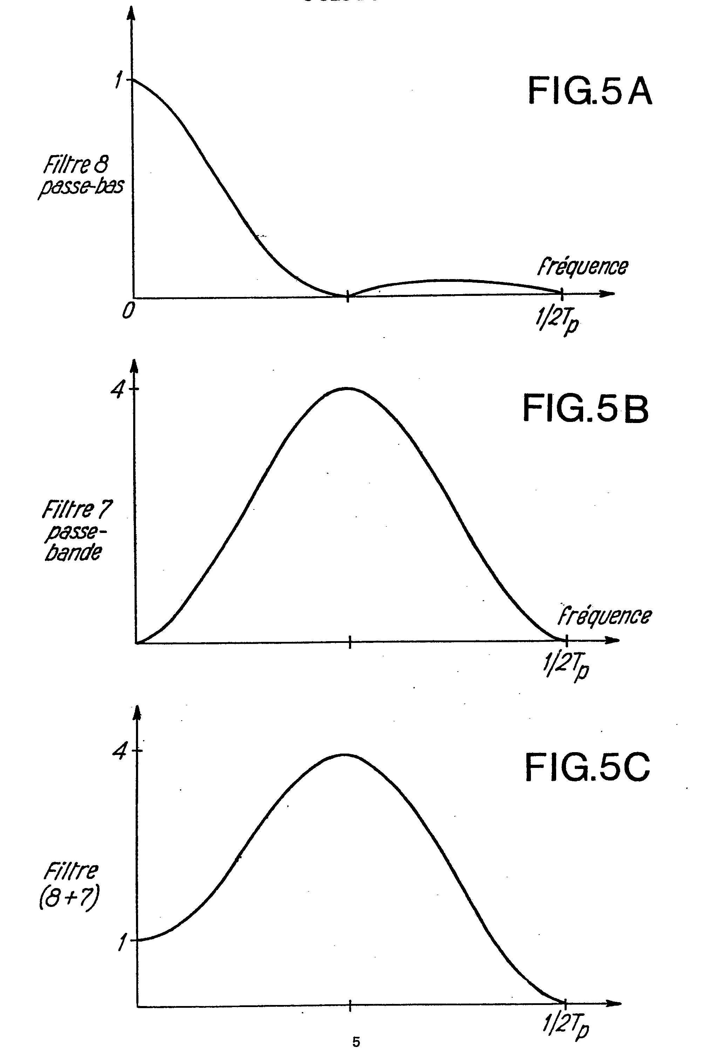

Dans le circuit de filtrage 4 de la Fig. 4, le filtre passe-bas 8 écrête les différences d'amplitude dues aux pointes de bruit, mais détecte le mouvement. Le filtre passe-bande 7 est centré sur une valeur proche de celle du maximum d'acuité visuelle et détecte les détails fins. On sait toutefois que le signal résultant de la somme des sorties des filtres 7 et 8 correspond à une courbe de réponse du genre de celle de la Fig. 3b, ce qui entraînerait des erreurs de décision pour les zones Z2 et Z6, comme on l'a expliqué plus haut. A la Fig. 5a, on a représenté la réponse d'un filtre passe-bas, tel que 8, correspondant à la formule (3) ci-dessous; à la Fig. 5b, on a représenté la réponse d'un filtre passe-bande, tel que 7, correspondant à la formule (2) ci-dessous; et à la Fig. 5c, on a représenté la somme des réponses qui donne une courbe voisine de celles de la Fig. 1.

Le circuit d'inversion de polarité 9 délivre un signal de sortie dont l'amplitude est celle du signal qui lui est appliqué par le filtre 7, affecté d'un signe qui est le produit des signes des signaux appliqués par les filtres 7 et 8. Le tableau suivant indique le fonctionnement du circuit d'inversion de polarité.

| S1 | S2 | S3 |
|---|---|---|
| positif | positif | S2 |
| positif | négatif | —S2 |
| négatif | positif | —S2 |
| négatif | négatif | S2 |

dans lequel S1 et S2 représentent respectivement les signaux de sorties des filtres 8 et 7.

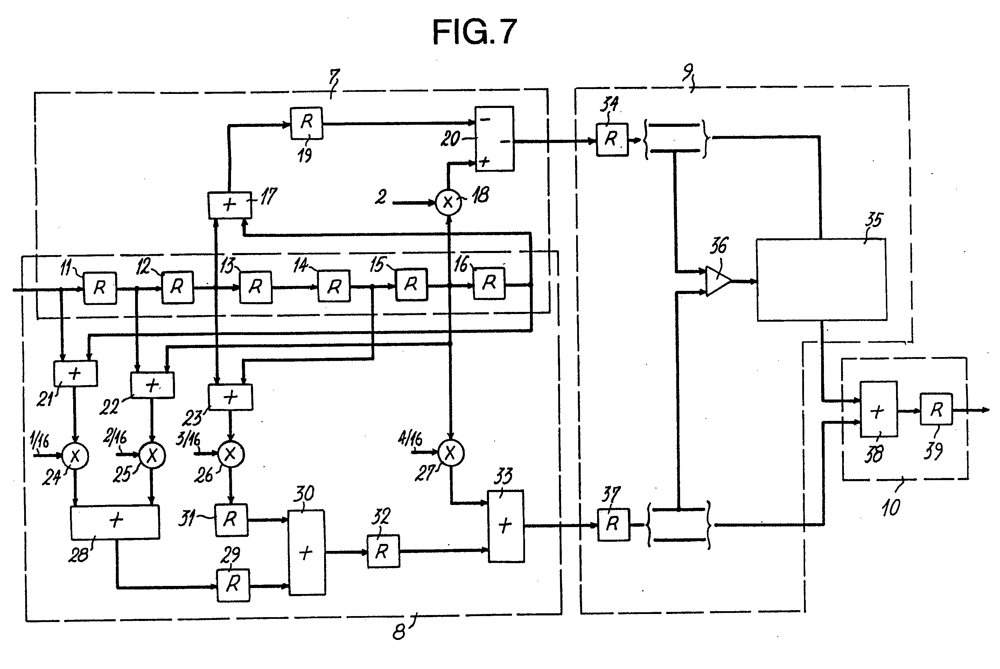

Le signal S1 et le signal de sortie du circuit d'inversion 9, qui correspond au signal de la troisième colonne du tableau ci-dessus, sont ensuite ajoutés dans le circuit additionneur 10. La courbe du signal de sortie de l'additionneur 10 en fonction du temps a alors l'allure de la courbe de la Fig. 6.

On observera que, dans la courbe de la Fig. 6, les zones du genre de Z2 ou Z6 n'existent plus. En effet, pour la zone Z2 de la Fig. 3b, le signal de sortie du filtre passe-bas 8 est positif. Donc le circuit 9 délivre le signal —S2 qui est positif et qui ajouté au signal positif S1 dans 10 donne, à la sortie de ce dernier, un signal positif. On supprime donc à la sortie du circuit de filtrage toute possibilité d'erreur de décision.

Le schéma détaillé de la Fig. 7 indique comment peuvent être réalisé les filtres 7 et 8, ainsi que le circuit 9. Les filtres 7 et 8 on en commun une chaîne de circuits à retard 11 à 16 montés en série, chaque circuit à retard apportant un retard égal à une période d'échantillonnage T. L'entrée du circuit à retard 11 est reliée à la sortie du soustracteur 3, qui délivre les différences d'amplitude inter-image.

Dans le filtre 7, les sorties des circuits à retard 12 et 16 sont respectivement reliées aux deux entrées d'un additionneur 17, tandis que la sortie du circuit à retard 15 est reliée à l'entrée d'un multiplicateur 18, dont le coefficient de multiplication est égal à 2. La sortie de l'additionneur 17 est reliée à l'entrée d'un circuit à retard 19 dont la sortie est reliée à l'entrée—d'un soustracteur 20. La sortie du multiplicateur 18 est reliée à l'entrée +du soustracteur 20. Le circuit 19 apporte aussi un retard égal à T.

On peut vérifier que le signal $S_2(t)$ qui est délivré à la sortie du soustracteur 20 correspond à la formule ci-dessous:

$$S_2(t) = -E(t-2T) + 2E(t) - E(t+2T) \quad (2)$$

En effet, le circuit 19 mémorise pendant une période d'échantillonnage le résultat de l'addition des sorties de 12 et 16, tandis que le circuit 15 mémorise la sortie de 14 au moment où les sorties de 12 et 16 sont additionnées dans 17.

Dans le filtre 8, l'entrée de 11 et la sortie de 16 sont respectivement reliées aux entrées d'un additionneur 21. Les sorties de 11 et 15 sont respectivement reliées aux entrées d'un additionneur 22. Les sorties de 12 et de 14 sont respectivement reliées aux entrées d'un additionneur 23. La sortie de l'additionneur 21 est reliée à l'entrée d'un multiplicateur 24, dont le coefficient de multiplication est égal à 1/16. La sortie de l'additionneur 22 est reliée à l'entrée d'un multiplicateur 25, dont le coefficient de multiplication est égal à 2/16. La sortie de l'additionneur 23 est reliée à l'entrée d'un multiplicateur 26, dont le coefficient de multiplication est égal à 3/16. La sortie de 15 est également reliée à l'entrée d'un multiplicateur 27, dont le coefficient de multiplication est égal à 4/16. Les sorties des multiplicateurs 24 et 25 sont respectivement reliées aux entrées d'un additionneur 28 dont la sortie est reliée, par l'intermédiaire d'un circuit à retard 29, à une entrée d'un additionneur 30. La sortie du multiplicateur 26 est reliée, par l'intermédiaire d'un circuit à retard 31, à l'autre entrée de l'additionneur 30. La sortie de 30 est reliée, par l'intermédiaire d'un circuit à retard 32, à une entrée d'un additionneur 33, dont l'autre entrée est reliée à la sortie du multiplicateur 27. Les circuits 29, 31 et 32 apportent chacun un retard égal à T.

On peut vérifier que le signal $S_1(t)$ qui est délivré à la sortie de l'additionneur 33 correspond à la formule ci-dessous:

$$S_1(t) = \frac{1}{16}E(t-3T) + \frac{2}{16}E(t-2T) + \frac{3}{16}E(t-T) + \frac{4}{16}E(t) + \frac{3}{16}E(t+T) + \frac{2}{16}E(t+2T) + \frac{1}{16}E(t+3T) \quad (3)$$

On a représenté à la Fig. 5a le diagramme amplitude-fréquence correspondant à la formule (3) ci-dessus du signal $S_1(t)$ de sortie de l'additionneur 33, c'est à dire du filtre passe-bas 8. L'allure de la courbe de la Fig. 5a est bien connue dans le domaine des filtres numériques. De même, on a représenté à la Fig. 5b le diagramme amplitude-fréquence correspondant à la formule (2) ci-dessus du signal $S_2(t)$ de sortie du soustracteur 20, c'est à dire du filtre pase-bande 7. L'allure de la courbe de la Fig. 5b est également bien connue dans le domaine des filtres numériques. A la Fig. 5c, on a représenté la somme des courbes des Figs. 5a et 5b qui effectivement correspond à l'allure des courbes de la Fig. 1. La fréquence d'échantillonnage d'un signal de télévision étant normalement de l'ordre de 8 à 9 MHz, ce qui correspond à T compris entre 110 et 125 ns, il apparaît bien que la fréquence correspondant au maximum de la courbe de la Fig. 5c est voisine de 2 MHz, c'est à dire des fréquences des maxima des courbes de la Fig. 1. Comme on l'a dit plus haut, on ne procède pas à l'addition simple des sorties des filtres, mais on introduit l'inverseur de polarité 9.

Il faut encore noter que les circuits de retards 19, 29, 31 et 32 sont prévus pour tenir compte des temps de calcul dans les circuits d'addition ou de multiplication qui les précèdent. Bien entendu, les lectures de ces circuits à retard sont synchronisées par une horloge classique non montrée.

Le circuit d'inversion de polarité comprend un circuit à retard 34 dont l'entrée est reliée à la sortie du soustracteur 20 et dont la sortie est reliée à l'entrée d'un circuit 35. De plus, la sortie de signe du circuit 34 est reliée à .une entrée d'un circuit OU-exclusif 36 dont la sortie est reliée à l'entrée de commande du circuit 35. Le circuit d'inversion de polarité 9 comprend encore un circuit à retard 37 dont l'entrée est reliée à la sortie de l'additionneur 33 et dont la sortie est reliée à une entrée d'un additionneur 38. De plus la sortie de signe de 37 est reliée à la seconde entrée du circuit OU-exclusif 36. Le circuit 35 est un circuit commandable de "complémentation à deux" qui, selon le signal appliqué à son entrée de commande laisse passer le signal qui lui est appliqué par 34 sans en changer le signe ou transmet le complément à deux de ce signal. Comme l'indique le tableau ci-dessus, si les valeurs appliquées aux deux entrées du circuit 36 sont de même signe, le signal de sortie de 36 est tel que 35 ne procède pas à la complémentation, mais si ces valeurs sont de signes contraires, il fait procéder à la complémentation à deux. La sortie du circuit 35 est reliée à l'autre entrée de l'additionneur 38. La sortie de l'additionneur 38 est reliée à l'entrée d'un circuit à retard 39, avec lequel il constitue le circuit 10 de la Fig. 4. Bien entendu, les circuits à retard 34, 38 et 39 sont justifiés pour des raisons de temps de calcul dans les circuits qui les précèdent.

## Revendications

1. Détecteur de mouvement pour systèmes de réduction de visibilité du bruit sur des images de télévision à traitement numérique comprenant un filtre temporel numérique (1) et une mémoire d'échantillons d'image (2) dont l'entrée est reliée à la sortie du filtre temporel (1), le filtre temporel (1) combinant l'échantillon d'image à traiter avec l'échantillon correspondant délivré par la mémoire (2), le paramètre de combinaison du filtre temporel (1) étant déterminé par un circuit de décision (5), un circuit de soustraction (3) dont une entrée (A) reçoit l'échantillon d'image à traiter et l'autre entrée (B) l'échantillon correspondant délivré par la mémoire d'image (2), caractérisé en ce qu'il comprend un filtre passe-bas (8) et un filtre passe-bande (7) dont les entrées reçoivent en parallèle les échantillons délivrés par ledit soustracteur (3), la sortie du filtre passe-bande (7) étant reliée à l'entrée d'un circuit commandable d'inversion de polarité (9) dont la sortie est reliée à une entrée d'un additionneur (10), la sortie du filtre passe-bas (8) étant reliée à l'autre entrée de l'additionneur (10), les sorties de signe des filtres passe-bande (7) et passe-bas (8) étant, de plus, reliées respectivement aux deux entrées d'un circuit OU-exclusif (36) dont la sortie est reliée à l'entrée de commande dudit circuit commandable d'inversion de polarité (9), l'inversion de polarité étant effectuée dans ledit circuit commandable d'inversion de polarité quand les valeurs des entrées du circuit OU-exclusif (36) sont différentes, la sortie dudit additionneur (10) étant reliée à un circuit de décision à seuils (5).

2. Détecteur de mouvement suivant la revendication 1, caractérisé en ce que ledit filtre passe-bande (7) est centré approximativement sur la fréquence spatiale correspondant au maximum d'acuité de l'oeil.

3. Détecteur de mouvement suivant la revendication 1 ou 2, caractérisé en ce que le filtre passe-bas (8) est un filtre passe-bas numérique dont le signal de sortie $S_1(t)$ est, en fonction du signal d'entrée E(t), donné par la formule suivante:

$$S_1(t)=\frac{1}{16}E(t-3T)+\frac{2}{16}E(t-2T)+\frac{3}{16}E(t-T)+\frac{4}{16}E(t)+\frac{3}{16}E(t+T)+\frac{2}{16}E(t+2T)+\frac{1}{16}E(t+3T)$$

4. Détecteur de mouvement suivant l'une des revendications 1 à 3, caractérisé en ce que le filtre passe-bande (7) est un filtre passe-bande numérique dont le signal de sortie $S_2(t)$ est, en fonction du signal d'entrée E(t), donné par la formule suivante:

$$S_2(t)=-E(t-2T)+2E(t)-E(t+2T)$$

5. Système de réduction de visibilité du bruit sur les images de télévision caractérisé en ce qu'il comprend un détecteur de mouvement selon l'une des revendications 1 à 4.

6. Système suivant la revendication 5, caractérisé en ce que ledit filtre temporel (1) délivre un signal qui résulte de l'addition de l'échantillon à traiter multiplié par p et de l'échantillon correspondant provenant de la mémoire (2), multiplié par (1—p), le coefficient p étant déterminé par le circuit de décision (5), dont la sortie dépend de la suite des signaux délivrés par ledit additionneur (10).

## Patentansprüche

1. Bewegungsdetektor für Systeme zur Verminderung der Sichtbarkeit des Rauschens in digital verarbeiteten Fernsehbildern, mit einem digitalen Zeitfilter (1) und einem Bildabtastwert-Speicher (2), dessen Eingang mit dem Ausgang des Zeitfilters (1) verbunden ist, wobei das Zeitfilter (1) den zu verarbeitenden Abtastwert mit dem entsprechenden vom Speicher (2) gelieferten Abtastwert kombiniert, wobei ferner der Kombinationsparameter des digitalen Zeitfilters (1) durch eine Entscheidungsschaltung (5) bestimmt wird, mit einer Subtraktionsschaltung (3), deren einer Eingang (A) den Abtastwert des zu verarbeitenden Bildes, und deren anderer Eingang (B) den entsprechenden, von dem AbtastwertSpeicher (2) gelieferten Abtastwert empfängt, dadurch gekennzeichnet, daß er ein Tiefpaßfilter (8) und ein Bandpaßfilter (7) enthält, deren Eingänge parallel die von der Subtraktionsschaltung (3) gelieferten Abtastwerte empfangen, daß der Ausgang des Bandpaßfilters (7) mit dem Eingang einer steuerbaren Polaritätsumkehrschaltung (9) verbunden ist, deren Ausgang mit einem Eingang einer Addierschaltung (10) verbunden ist, daß die Vorzeichenausgänge des Bandpaßfilters (7) und des Tiefpaßfilters (8) jeweils mit den beiden Eingängen einer Exklusiv-ODER-Schaltung (36) verbunden sind, deren Ausgang mit dem Steuereingang der steuerbaren Polaritätsumkehrschaltung (9) verbunden ist, wobei die Polaritätsumkehr in der steuerbaren Polaritätsumkehrschaltung bewirkt wird, wenn die Werte der Eingänge der Exklusiv-ODER-Schaltung (36) unterschiedlich sind, und daß der Ausgang der Addierschaltung (10) mit einer Schwellwertentscheidungsschaltung (5) verbunden ist.

2. Bewegungsdetektor nach Anspruch 1, dadurch gekennzeichnet, daß das Bandpaßfilter (7) auf etwa die räumliche Frequenz zentriert ist, die der maximalen Sehschärfe des menschlichen Auges entspricht.

3. Bewegungsdetektor nach Anspruch 1 oder 2, dadurch gekennzeichnet, daß das Tiefpaßfilter (8) ein digitales Filter ist, dessen Ausgangssignal $S_1(t)$ eine Funktion des Eingangssignals E(t) ist und durch folgende Formel gegeben ist:

$$S_1(t)=\frac{1}{16}E(t-3T)+\frac{2}{16}E(t-2T)+\frac{3}{16}E(t-T)+\frac{4}{16}E(t)+\frac{3}{16}E(t+T)+\frac{2}{16}E(t+2T)+\frac{1}{16}E(t+3T)$$

4. Bewegungsdetektor nach einem der Ansprüche 1 bis 3, dadurch gekennzeichnet, daß das Bandpaßfilter (7) ein digitales Filter ist, dessen Ausgangssignal $S_2(t)$ eine Funktion des Eingangssignals E(t) ist und durch folgende Formel gegeben ist:

$$S_2(t)=-E(t-2T)+2E(t)-E(t+2T).$$

5. System zur Verminderung der Sichtbarkeit des Rauschens in Fernsehbildern, dadurch gekennzeichnet, daß es einen Bewegungsdetektor nach einem der Ansprüche 1 bis 4 enthält.

6. System nach Anspruch 5, dadurch gekennzeichnet, daß das Zeitfilter (1) ein Signal liefert, das aus der Addition des zu verarbeitenden Abtastwertes multipliziert mit p und dem entsprechenden Abtastwert aus dem Speicher (2) multipliziert mit (1—p) resultiert, wobei der Koeffizient p durch die Entscheidungsschaltung (5) bestimmt ist, deren Ausgang von der Folge der Signale abhängt, die von der genannten Addierschaltung (10) geliefert werden.

## Claims

1. A motion detector for systems designed for reducing visible noise in digitally processed television pictures comprising a digital time filter (1) and a picture sample memory (2), the input of which is connected from the digital time filter (1), said digital time filter combining the picture sample to be processed with the corresponding sample delivered from the memory (2), the combination parameter of the digital time filter (1) being determined by a decision circuit (5), a substraction circuit (3) having one input (A) receiving the image sample to be processed and another input (B) receiving the corresponding sample delivered from the sample memory (2), characterized in that it comprises a low-pass filter (8) and a band-pass filter (7) having parallel inputs for receiving the samples delivered from the said substractor (3), the band-pass filter (7) output being connected to the input of a controllable polarity reversal circuit (9), the output of which is connected to one input of an adder (10), the sign outputs of both band-pass filter (7) and low-pass filter (8) being, in addition, respectively connected to the two inputs of an exclusive OR circuit (36), the output of which is connected to the control input of the controllable polarity reversal circuit (9), the polarity reversal being performed in the said controllable polarity reversal circuit when the values of the inputs of the exclusive OR circuit (36) are different, the output of the said adder (10) being connected to the threshold-type decision circuit (5).

2. A motion detector according to claim 1 characterized in that the said band-pass filter (7) is centered on approximately the space frequency which corresponds to the maximum acuity of the human eye.

3. A motion detector according to claim 1 or claim 2, characterized in that the low-pass filter (8) is a digital filter delivering an output signal $S_1(t)$ which is function of the input signal $E(t)$ as given by the following formula:

$$S_1(t)=\frac{1}{16}E(t-3T)+\frac{2}{16}E(t-2T)+\frac{3}{16}E(t-T)+\frac{4}{16}E(t)+\frac{3}{16}E(t+T)+\frac{2}{16}E(t+2T)+\frac{1}{16}E(t+3T)$$

4. A motion detector according to any of claims 1—3, characterized in that the band-pass filter (7) is a digital band-pass filter having an output signal $S_2(t)$ which is a function of the input signal $E(t)$, given by the following formula:

$$S_2(t)=-E(t-2T)+2E(t)-E(t+2T)$$

5. A system for reducing the visible noise on television pictures characterized in that it comprises a motion detector according to any of claims 1—4.

6. A system according to claim 5, characterized in that the said time filter (1) delivers a signal which results from the addition of the sample to be processed multiplied by $p$ and of the corresponding sample from the memory (2) multiplied by $(1-p)$, the coefficient $p$ being determined by the decision circuit (5), the output of which depends on the succession of the signals delivered from the said adder (10).

# FIG.1

Sensibilité relative de l'œil

Observation à 6H

Observation à 4H

f (MHz)

H = Hauteur de l'écran

# FIG.2

Réponse impulsionnelle
(valeur relative)

Courbe pour observation
à 6H

t (μs)

0   0,1   0,2   0,3   0,4   0,5

H = Hauteur de l'écran

# FIG.3A

Différence inter-image

Zone en mouvement

Y1          Y2

temps

# FIG.3B

Après filtrage

Y"1          Y"2

+S

temps

0

−S

Z1    Z2          Z3          Z4          Z5    Z6    Z7

# FIG.6

Après filtrage

temps

# FIG.4

MEMOIRE D'IMAGES — 2

FILTRE TEMPOREL
$S = pA + (1-p)B$ — 1

Signal filtré

DECISION — 5

FILTRE PASSE-BANDE — 7

INVERSION DE POLARITE — 9

FILTRE PASSE-BAS — 8

Différence inter-image filtrée — 4

0025730

FIG.5A

Filtre 8
passe-bas

fréquence

0

$1/2T_p$

FIG.5B

4

Filtre 7
passe-
bande

fréquence

$1/2T_p$

FIG.5C

4

Filtre
(8+7)

1

$1/2T_p$

# FIG.7